# EUROPEAN PATENT SPECIFICATION

(11) **EP 2 796 995 B1**
(45) Date of publication and mention of the grant of the patent: **04.10.2017**
(21) Application number: 13165126.7
(22) Date of filing: 24.04.2013
(51) Int. Cl.: G06F 9/445

(54) **Method for managing applications on a mobile computing device and mobile computing device**
Verfahren zur Verwaltung von Anwendungen auf einer mobilen Datenverarbeitungsvorrichtung und mobilen Datenverarbeitungsvorrichtung
Procédé de gestion d'applications sur un dispositif informatique mobile et dispositif informatique mobile

(43) Date of publication of application: 29.10.2014
(73) Proprietor: Vodafone GmbH, 40549 Düsseldorf (DE)
(72) Inventor: Chandran, Iyer Vinay, 40239 Düsseldorf (DE); Hubbard, Julian, 50678 Köln (DE); Hartmann, Norman, 40545 Düsseldorf (DE)
(74) Representative: Müller & Schubert

(56) References cited:
- US-A1- 2011 267 985

## Description

The present invention relates to a method for managing applications on a mobile computing device and to a mobile computing device.

Consumers have multiple devices at home like a digital clock, weather information devices, picture frames, analogue radio and digital radio. There are also devices which consumers carry on the go like music player, navigation system, car entertainment system, personal storage etc. One of the reasons why consumers buy all of these devices is to get a dedicated user experience for that particular device which usually the user does not get in a multi-functional device. Tablet computers or Tablets are becoming a device that has the potential to drive all of the above device use cases. Even if some of these use cases are supported by applications running on a platform or via browser, these use cases are not triggered the same way how the user triggers it with specific devices and do not have the dedicated user experience for that one use case for which the user buys the device.

US 2011/0267985 A1 relates to techniques to provide integrated voice service management. According to this document, user convenience of a user of a mobile computing device may be enhanced by automatically selecting and establishing voice and data connections to one or more voice service platforms based on a set of decision parameters, rules and/or preferences once the user places a call.

The handling of several applications on one single device, in general requires specific knowledge of the user on how to initiate and work the respective applications on a single device.

The problem underlying the present invention is thus to provide a solution, which allows for a user to use several applications on one single device in a simple manner. In particular, the present invention is targeted to solve the above problem of how a computing device can drive an experience equal or better than a dedicated device and replace all the above and even more devices with a single computing device.

According to a first aspect, the present invention thus relates to a method for managing applications on a mobile computing device, which comprises at least one management unit. The method is characterized in that at least one external trigger event is detected by a detection unit of the management unit, wherein the external trigger event relates to the state of the mobile computing device, in that based on the detected external trigger event a trigger is established and based on the trigger an action, which is associated to the trigger in an association database, is automatically determined in an appliance manager of the management unit and in that the determined action relates to at least one application and that the determined action is initiated automatically.

A mobile computing device according to the present invention, which is hereinafter also referred to as computing device, may be any computing device, which in normal use can be moved from one position to another and/or its orientation can be changed. The mobile computing device is preferably a portable device, such as a notebook, PDA, tablet computing device of any size, smartphone of any size and the like. According to the present invention, the mobile computing device is provided with processing capability. Even though the invention will mainly be described with respect to a tablet computing device, which will also be referred to as tablet or tablet device, it can be implemented in any other mobile computing device.

Applications on a mobile computing device according to the present invention are any programs or services which can be run or executed on a mobile computing device. In addition to functions provided by known applications, the applications according to the invention preferably have means for listening to internal messages of the mobile computing device. The applications according to the invention preferably provide a user interface. The user interface may be, for example, visual, audio and/or haptic. Preferably, the applications according to the invention provide a specific user interface for providing a user experience to the user which corresponds to the user experience when using a separate device for the specific use. The applications which are to be managed by the method of the present invention are preferably at least partially installed on the mobile computing device. The application may be a client which communicates with external units, e.g. via the Internet. Examples of applications for the method of the present invention are picture frame, clock, radio, music rendering. The applications according to the present invention may also be referred to as appliances.

The management unit of the mobile computing device according to the invention may be at least partially provided on the processor or CPU of the mobile computing device. Further units of the mobile computing device such as for example a USB driver or other peripheral units may be part of the management unit. This means that the management unit may comprise several components or that the logic of the management unit may be performed on several components of the mobile computing device.

An external trigger event which is detected according to the invention is an event which is used in the management unit to determine an action which is to be carried out for that trigger event. The external trigger event is preferably an event which is related to the environment of the mobile computing device. The external trigger event relates to the state of the mobile computing device. The state of the mobile computing device is the state of the mobile computing device with respect to the environment in which the mobile computing device is currently present. The relation of the external trigger event to the state of the mobile computing device may be an indication of the state or information which may be derived from the state of the mobile computing device. Examples of situations which result in a specific external trigger event are the mobile computing device being positioned in a specific angle, the mobile computing device being connected to an external device, the mobile computing device being at a specific location in a network environment, the mobile computing device being a specific geographical location. These situations are represented by for example external trigger events such as a specific angle, a connection to a WiFi hotspot, the recognition of a pattern representing a specific geographical location, recognition of a unique identifier provided by a dock or plug, recognition of light conditions of a specific geographical location and/or recognition of a positioning signal of a positioning system such as GPS.

The management unit comprises a detection unit for detecting external trigger events. The detection unit may be part of the management unit or may be connected to the management unit for communication with the management unit. This communication at least comprises the transmission of signals which represent or are related to the external trigger event from the detection unit to the management unit. The detection unit may serve as a unit for mere detection of presence or absence of an external trigger event. In addition the detection unit may also provide means for processing a detected external trigger event. In particular the detection unit may add information to the detected external trigger event, such as an identification of the detection unit.

The management unit further comprises an appliance manager. The appliance manager may be part of the management unit or may be connected to the management unit for communication with the management unit. At least part of the appliance manager may for example be comprised other components of the mobile computing device such as for example a USB driver.

According to the invention a trigger is established based on the detected external trigger event. The establishing of a trigger may be processing or transmission of a signal received or generated at the detection unit. The processing may comprise a conversion or decryption of the generated or received signal. The establishing may also comprise the addition of information to the signal which has been received or generated at the detection unit. The information which is added to the signal may for example be an identification of the detection unit.

According to the invention, a trigger is associated to an action in an association data base. The association or mapping of a trigger to an action may be established in a table in the association data base. Preferably, only one action is associated to each trigger. The association of a trigger to an action may be preformed automatically, semi-automatically or manually as will be described later in detail. The association of a trigger to an action in the association database may be preset by the provider of the management unit or mobile computing device. In addition, the user preferably may access the association database directly or indirectly. By direct access, the user for example via a user input unit may preset associations of triggers to actions or may change such associations. In an indirect access, the user may for example respond to a prompt issued by the management unit which queries an association of an established trigger to an action.

The determination of the action, which is associated to the detected trigger, is performed automatically in the method according to the invention.

The determined action according to the invention relates to at least one application and the determined action is initiated automatically. The action is preferably initiated by the appliance manager of the management unit but may also be initiated by a different unit or component of the management unit.

The actions relating to an application according to the invention, in particular are actions, which effect the execution of the appliance. The action according to the present invention may also effect the execution of several applications. Examples for actions which may be initiated based on the trigger and thus based on the external trigger event are launching of an application, establishing a communication connection to at least one external device for obtaining information or resources for executing an application, setting a context based mode for one or several applications and/or providing a prompt to the user for selecting an application and/or for selecting settings for one or several applications.

In case of the action being a prompt to the user, the prompt may in particular provide the user of the mobile computing device with a choice of applications and/or context based modes. As this prompt is generated based on a trigger, it is possible, with the method according to the invention to associate the choice made by the user with the trigger which initiated the prompt. Thereby, future occurrences of the same trigger will automatically result in the initiation of the application or settings selected by the user.

The initiation of an action may for example be performed by directly addressing a specific application with an instruction to launch. It is, however also possible, that the initiation of the action is performed by a broadcast within the mobile computing device. In this case, the applications on the mobile computing device will listen for a broadcast.

With the present invention, it will thus be possible to initiate an action based on the external trigger event which was detected by the mobile computing device. Hence, the user will not have to manually initiate the action. Furthermore, as the association of action to trigger is provided by an association database, which is provided in the mobile computing device, the association may be personalized to the needs of the user of this specific mobile computing device. Hence, the user will be provided with the user experience, which he expects or desires.

According to one embodiment, the state of the mobile computing device, to which the external trigger event relates, relates to the position or location of the mobile computing device. The position or location of the mobile computing device is preferably the position or location of the mobile computing device within an environment. As a mobile computing device can assume several positions or locations in an environment, and also different environments such as a communication network or a building may be considered, a large number of external trigger events may occur. As an action can be associated to each of the triggers which are established based on the external trigger events, a multitude of actions can be initiated with the inventive method. The method of the present invention, hence, provides a high degree of flexibility.

According to the present invention, the external trigger event may relate to the location of the mobile computing device in a wireless communication network, to the geographical location of the mobile computing device, to the electrical connection of the mobile computing device to an external device and/or to the angular position of the mobile computing device.

The location of the mobile computing device in a wireless communication network may be, for example, the cell within which the mobile computing device is present. As such locations in a wireless communication network are monitored by the network operator for other purposes, no additional detection of the location is mandatory for the method according to the invention and the method can thus be implemented in a simple way. The wireless communication network may be a mobile communication network such as cellular mobile radio network it may, however, preferably also be a local area network, which only covers a smaller range, for example a wireless local area network (WLAN, WiFi).

If the external trigger event relates to the location of the mobile computing device within such a local area network, the trigger can for example be based on WiFi hotspots. When the mobile computing device connects to a new hotspot or WiFi router, the environment of that hotspot or router may be considered by the action, which is associated to this external trigger event. In particular, different actions may be associated to external trigger events which indicate that the user is in different rooms of his home. Thereby, the expected user experience can be met even better than by using less precise position information. The action associated to an external trigger event relating to the position in a local area network may for example be the launch of a specific application if the mobile computing device is in a specific room. Alternatively or additionally, the action may be establishing settings of one or more applications in a defined way. For example, the settings of a music application may be selected to be at low volume for a room which is a bedroom and at high level at a room which is a party room.

In addition or alternatively, the external trigger event may relate to the geographical location of the mobile computing device. The geographical location of the mobile computing device may be detected by a positioning system such as GPS. These systems are already established, so that not change to existing infrastructures is necessary. Also WiFi triangulation can be used for determining the location of the mobile computing device. In this embodiment, the user can decide to associate an action (e.g. launch an appliance or a context mode) to a particular geographical location. So every time the mobile computing device is in this location coordinates the mobile computing device will automatically perform the associated action. With this external event trigger it will for example be possible to define different actions to be initiated for situations where the mobile computing device is at the home of the user or at the office of the user.

Also the external trigger event may be related to an electrical connection of the mobile computing device to an external device. In this case in particular the presence or absence of a plug inserted into the mobile computing device may be observed. The external device may for example be a power supply plug. By using this state of the mobile computing device for the trigger, it is possible to also obtain additional information on the mobile computing device such as the battery level.

The external device may also be a dock, which can also be referred to as a docking station. Every dock will have a unique identifier which will be transferred to the docked mobile computing device using an electrical current. The docked computing device will measure the current value and based on the current value it will decrypt the dock identifier. Hence, the external trigger event in this case is the current value received via the dock. The mobile computing device can associate the decrypted dock identifier, which in that case is the trigger, to a particular appliance or context mode. If the user connects to the dock having an id which is already associated then the associated appliance or context mode is launched. If there is no association already made with the dock identifier, then the user will be provide with an option to associate an already existing appliance or context mode or download one from the shop which then is associated with the dock identifier. The dock id can also be interpreted using USB technology if the dock can work as a USB hub the uid of the USB hub in the dock will be used to uniquely identify the dock by the mobile computing device and assign it to a particular action.

According to a preferred embodiment, the external trigger event is an angular position of the mobile computing device. The angular position of the mobile computing device may for example be the tilt or rotation at which the mobile computing device is currently being held or put or the movement form one angular position to another. To different angles, different actions may be associated. As the mobile computing device can be placed in a large number of angles, the number of actions which can be defined is large. Hence, the flexibility of the method is increased by using the angular position of the mobile computing device as an external trigger event. In addition, the angular position of the mobile computing device can be used together with other external trigger events to determine the desired action. For example different actions may be assigned to a specific angle for different locations of the mobile computing device. For example, one angular position of the mobile computing device in the bedroom of the home of the user may be associated to a different action than the same angular position of the mobile computing device in the living room of the home of the user. Hence, the flexibility of the method according to the invention is further increased.

According to the invention the external trigger event may be detected by optical, mechanical and/or electronic means. That means the detection unit comprises at least one of these means.

Optical means may be sensors or recording means. For example, the optical means may be a camera, a light sensor and the like. By using optical means for detection of an external trigger event, the variety of triggers and their distinction is large and the method can thus be used in a flexible way. Furthermore, the usage of optical means allows for addressing different scenarios. Mechanical means, which may serve for detection of an external trigger event, are for example connectors such as plugs. Electronic means are preferably sensors, such as for example gyro sensors.

According to one embodiment, the trigger, which is established based on the external trigger event, comprises a trigger value of the trigger event and an input indicia indicative of the event nature, wherein preferably a combination of a trigger value and an input indicia is assigned to only one action. The input indicia may also be referred to as input. The trigger value may be an identifier of the detection unit used for detecting the external trigger event. In addition or alternatively, the trigger value may be a value which has been detected by the detection unit such as an angle of the mobile computing device or a coordinate of the location of the mobile computing device. The input indicia serves for further defining the trigger value and thereby for specifying a specific trigger event. The input indicia may for example indicate Location, Angle, Dock, Camera, Microphone, Ambient light. The trigger value may be for example the Hot Spot SSID, a value of an angle, coordinates, a dock identifier, a pattern, the detection or lack of detection of sound.

Preferably a combination of a trigger value and an input indicia is assigned to only one action. By using a combination of a trigger value and an input indicia, one single action may be assigned to this combination, but the same input means may still be used to trigger other actions for different trigger values. Thereby, the flexibility of the method is further increased.

According to a preferred embodiment, the duration for which an external trigger event has been detected is monitored. This condition is preferably monitored by a monitoring unit of the management unit. The monitoring unit may be part of the management unit or may be connected to the management unit. The monitoring unit may also be part of the detection unit of the management unit. The monitoring unit may comprise a timer.

By monitoring the duration for which an external trigger event has been detected, short term conditions of the mobile computing device may be ignored and the method according to the present invention thus becomes more reliable. For example, a brief tilting of the mobile computing device to an angle which would be associated to a specific action within the management unit may be disregarded.

For example, if the computing device is steady in a particular angle for more than few milliseconds then this angle can be associated with a particular action. For example, three different angles can be preset to be associated with three different appliance launches. In this case, when the tablet is put on a stand and a particular angle is detected, the computing device will check the associated action (e.g. launch of an appliance) and perform the action automatically. The trigger for detecting the angle might be based on other triggers like charger being connected which is mainly to ensure that the computing device does not have to continuously scan for the angle and drain the battery.

According to one embodiment, the trigger is based on at least two external trigger events. In this embodiment, the trigger which is based on at least two external trigger events will, hence, only be established if the at least two external trigger events have been detected. Thereby, the number of triggers can be further increased without the need of providing additional detection units. For example, the trigger may be based on an external trigger event indicating the location of the mobile computing device in a wireless network such as a WLAN and another external trigger event indicating that the mobile computing device is tilted to a specific angle. Thereby the resulting trigger may represent the case that the mobile computing device is in a specific room of the home of the user of the mobile computing device and tilted to a certain angle. For the bedroom for example an angle of 20° may be associated to an action of launching an alarm clock appliance, whereas for the living room an angle of 20° may be associated to an action of launching a picture frame appliance.

In one embodiment, preferably a priority of external trigger events is observed in the management unit for triggers which are based on at least two external triggers. This may be realized by only establishing a trigger which is based on two external trigger events if the external trigger event of higher priority has been detected. This priority is preferably stored in the management unit of the mobile computing device. The external trigger event which is of higher priority may for example be the external trigger event that the mobile computing device is connected to a power source. This external trigger event may be used separately for determining the location of the mobile computing device in a house. If a trigger, however, is defined by this external trigger event and an additional trigger event such as the angle of the mobile computing device, the resulting trigger which is associated to launching for example an application will only be established if the mobile computing device is connected to a power source. Thereby, draining of the battery of the mobile computing device can be avoided.

The association of triggers to actions in the association database may be carried out automatically, semi-automatically and/or manually. An automatic association may for example be performed by an artificial intelligence incorporated in the mobile computing device. This artificial intelligence may consider stored associations or derive possible associations from other interactions of the user with the mobile computing device, which are not related to the association itself. For example, the artificial intelligence may observe applications frequently used by the user and may associate those to locations detected at the usage of the application.

According to a preferred embodiment, the association is, however, carried out semi-automatic. Semi-automatic in this context refers to an association which is at least partially based on user input for the association. The user input which is considered in this semi-automatic association is preferably the selection of an application or setting by the user in response to a prompt issued by the management unit of the mobile computing device. In particular, if no action such as launching of an application or selecting a setting is associated to a trigger in the association database, a default action may be provided. This default action is preferably the output of a choice of applications or settings to the user. The input of the user to such a prompt will in the semi-automatic association be stored in the association data base and will be used at the future occurrences of the respective trigger. A further prompt will then not be generated. With this semi-automatic association the management unit and in particular the appliance manager will learn the user preferences and the actions which will be initiated in the future will be the preferred actions of the user.

In the manual association, of trigger to action, the user may be prompted each time a trigger is established based on a trigger event. Also in this embodiment, the present invention is advantageous over the prior art, as a list of application suited for launching in response to the trigger may be provided to the user and the user thus does not have to select from all applications which are available on the mobile computing device. In addition, even applications which are not available on the mobile computing device but which would be suitable for the trigger may be suggested. For example an alarm clock application may be included in a list of applications which may be launched if the mobile computing device is in the bedroom. If this application is not available on the mobile computing device, the action which is initiated by the management unit will be the downloading of this application to the mobile computing device. In this embodiment, the first action, which is automatically initiated, is the prompt to the user which includes a list of applications. Upon receipt of user input, i.e. selection of an application, the association between the launching of this application as an action and the original trigger is stored in the management unit. With this association being stored, at the next occurrence of the trigger the action of launching of the application would be initiated. If this application is not installed on the mobile computing device at that point, the management unit may initiate the download and installation of the application.

The invention thus provides an artificial intelligence engine which can be built to drive seamless transition of the mobile computing device from one application to another. The mobile computing device may maintain a database or a table capturing all triggers as described above and assign it to actions either automatically or manually. The computing device in that embodiment can keep learning based on information from these sensors, user actions, the environment around and keeps updating the artificial intelligence database.

According to the invention, the action which is initiated comprises launching an application, establishing settings of the mobile computing device, in particular settings of at least one application, generating a prompt to the user and/or accessing content. As according to the invention different triggers may be used, this variety of actions can be addressed with unique triggers and the method according to the invention can thus be employed reliably. In addition, as the action includes launching of an appliance, the user experience is improved. The user in that case does not have to perform any action. In addition, establishing settings of the mobile computing device increases the user experience, as these settings do not have to be entered separately by the user. Finally, the action of accessing content provides the option of downloading applications or accessing other content and providing it to the user.

Launching an application according to the invention relates to starting the application. Preferably, launching of the application is understood as starting an application with specific settings and/or functionalities. In particular, the status of an application which has been previously been used is stored and upon a subsequent launching of the application, this status is re-established. For example, for a radio application, the radio station which had been previously been selected, is selected when launching the application again. In addition, the application is preferably launched in one specific use case. This use case is optimized for the user experience of the application. All other aspects of that use case are considered as settings. For example, if the application or appliance a digital clock then the one use case which should be optimized for experience is showing TIME. All other aspects of the digital clock like Alarm, weather etc. can be set using settings menu.

The action of establishing settings of the mobile computing device may be loading a preset selection of settings. For example, the volume level, the brightness level and other levels of the output of the mobile computing device may be used when settings are established as an action in response to a trigger. These settings may be general settings which are stored in the mobile computing device. Preferably, the settings are context based settings, which will hereinafter also be referred to as context based mode. As the settings are established based on a trigger and this action is associated to the trigger, for example lower volume and brightness settings for the output unit of the mobile computing device may be used for a trigger indicating that the mobile computing device is in the bedroom. The settings, which may be established as a response to a trigger, are preferably settings of at least one application. By establishing a context based setting, settings of various applications, in particular applications which are managed by the management unit of the present invention and which are referred to as appliances may be set simultaneously. For example if the mobile computing device is connected to a hotspot with SSID "home" then the context is "I am at home". If the computing device is connected to a hotspot with SSID "work" then the context is "I am at work". If the accelerometer is running at a speed more than 10km/h then the context is "I am driving or travelling". Now based on each context the user assign what should be covered in that context by responding to a prompt or by making initial settings. Alternatively or additionally, the settings of a certain context base mode can automatically be set by the management unit, in particular the appliance manger based upon previous selections of the user. A context can group certain experiences to the end user. Some of the items in context are Application/Widget, Content, Settings particular for that context, etc.

The action of generating a prompt is in particular the prompt where a user is provided with a choice of applications to be launched or context modes to be established. This action may be a default action, if no other action is assigned to a trigger in the association database. Thereby, new states of the mobile computing device which are expressed by the trigger may be accounted for.

Furthermore, the action which is associated to a trigger may be accessing content. This action may be downloading content from a different unit, such as a server on the internet. It may, however, also be accessing content available at the server, such as pictures files or music files.

According to a preferred embodiment, before initiating the action, the management unit checks for availability of the resources required for the action and in absence of the resources obtains the resources. The resources may be obtained for example by downloading the resources from the Internet. This embodiment further improves the user experience. The resources may, however, also be obtained by connecting the mobile computing device to other external devices such as external speakers. The latter case is for example advantageous if the action, which is associated to the established trigger is launching a music application or a radio application.

If the resource, which is found to be missing is for example the application, which is to be launched according to the action, the respective application or appliance may be purchased. The design of how such obtaining of resources may be performed and configured on a mobile computing device using an online shop is as follows. The appliance manager and possible also a unit which is separate to the appliance manager but which launches appliances on the mobile computing device and may be referred to as an appliance launcher, will be designed to have an option to link to an online shop. The online shop will have a filter for appliances and device and only display appliances fit for that device. The appliance can be either available for free or at a particular cost. If user decides to download a free appliance or purchase an appliance then this appliance is downloaded, installed and the control comes back to the appliance manager or launcher showing the appliance just downloaded. According to one embodiment, the user then has an option to assign a particular trigger, for example the detection of a dock, to this appliance instead of an already existing one.

According to one embodiment, the action is carried out in a different way when initiated by the appliance manger then by initiation of another unit of the mobile computing device, in particular manual input keys. For example, an application, which is launched may be output in a different manner. In particular, a display of the application may be full screen, when launched by the appliance manager rather then display in a smaller window, when launched manually. This embodiment is advantageous, as certain preferences of the user may already be considered when first launching an application. In addition, in case of the action which is initiated being a prompt to the user, with a choice of applications, such a prompt may be limited to applications which are supported by the appliance manager.

According to a further aspect, the invention relates to a mobile computing device having at least one management unit for managing applications on the mobile computing device. The mobile computing device is characterized in that the management unit comprises at least one detection unit for detecting at least one external trigger event relating to the state of the mobile computing device, at least one unit for establishing a trigger based on the detected external trigger event and at least one appliance manager, which comprises at least one association database for associations of triggers to actions and which automatically determines the action associated to the established trigger, and in that at least one unit of the mobile computing device is designed for initiating the determined action, which relates to at least one application automatically.

Features and advantages which are described with respect to the method of the invention also apply, as far as applicable, to the mobile computing device of the invention, and vice versa, and are thus only explained once.

The units of the mobile computing device may be hardware and/or software, in particular program or a routine of a program.

The unit for establishing a trigger based on the detected external trigger event is preferably the detection unit of the mobile computing device. This unit may be part of the management unit of the mobile computing device or may be connected thereto. The association database for associations of triggers to actions may be included in the appliance manager or may be connected thereto. The at least one unit of the mobile computing device which is designed for initiating the determined action, may be the appliance manager of the management unit or a different unit such as an output unit. The output unit may be a communication unit for establishing a communication to a remote unit such as a server on the internet or a peripheral device such as external speakers. Furthermore, the output unit may be a unit for generating and/or displaying a prompt to the user.

By providing a mobile computing device with which actions can automatically be initiated based on a trigger which is based on an external trigger event which relates to the state of the mobile computing device. The handling of the mobile computing device and in particular of several applications on the mobile computing device will be facilitated for the user.

In the or at the mobile computing device one or more detection units may be provided. Hereinafter it will mostly be referred to as one detection unit. The explanations and description, however, also apply to several detection units. According to one embodiment, the detection unit has optical, mechanical and/or electronic means for detecting the external trigger event. In particular, the detection unit may comprise a wireless connection unit, a camera, a mechanical connection unit, a location detection unit, and/or a sensor, in particular a light sensor or an angle sensor for detecting the external trigger event. The embodiments of these detection units and their benefits have already been described above in detail. Reference is made to those explanations herewith.

According to a preferred embodiment, the management unit comprises a memory unit for storing the association database of associations from triggers to actions for subsequent use of the association for determining an action which is associated to a trigger. As the associations are stored in the mobile computing device itself the association which is mandatory for determining the appropriate action, is available within the mobile computing device itself. Hence, the association can be performed rapidly and does not necessarily require the connection of the mobile computing device to a network such as the Internet. According to the present description, explanations made with respect to the association database relate to the memory unit and vice versa. The association database may also be a table. This table may be stored in the memory unit which may be part of the management unit or may be connected thereto.

According to one embodiment, the mobile computing device has at least one user input unit for receiving user input and the user input unit is connected directly or indirectly to the association database of connected to the management unit. By providing such user input interface, the user may either set specific associations of triggers to actions initially or the user may input such an association upon presentation of a prompt by the management unit of the mobile computing device. In particular with triggers which are related to the state of the mobile computing device, such as the angle of the mobile computing device, the flexible usage of the mobile computing device and in particular the management of the applications on the mobile computing device by the user is thus increased, while the handling is facilitated.

According to a further embodiment, the management unit is integrated in the operating system of the mobile computing device. By integrating the management unit into the operating system, the association and actions are not limited to applications, but can access core units of the mobile computing device.

Preferably, the mobile computing device has means for carrying out a method according the present invention.

The present invention is in the field of computing devices, in particular mobile computing devices. With the present invention an option is given for transforming a mobile computing device experience of the user, such as a tablet device experience, into dedicated appliance device experience. According to the invention, this experience can be triggered by using artificial intelligence logic.

The invention will now be described again with reference to enclosed figure, wherein:
Figure 1 shows a schematic view of an embodiment of a mobile computing device according to the invention;
Figure 2 shows the main steps of an embodiment of the method according to the present invention;
Figure 3 shows the main steps of another embodiment of the method according to the present invention; and
Figure 4 shows an embodiment of a dock for a mobile computing device according to one embodiment of the invention.

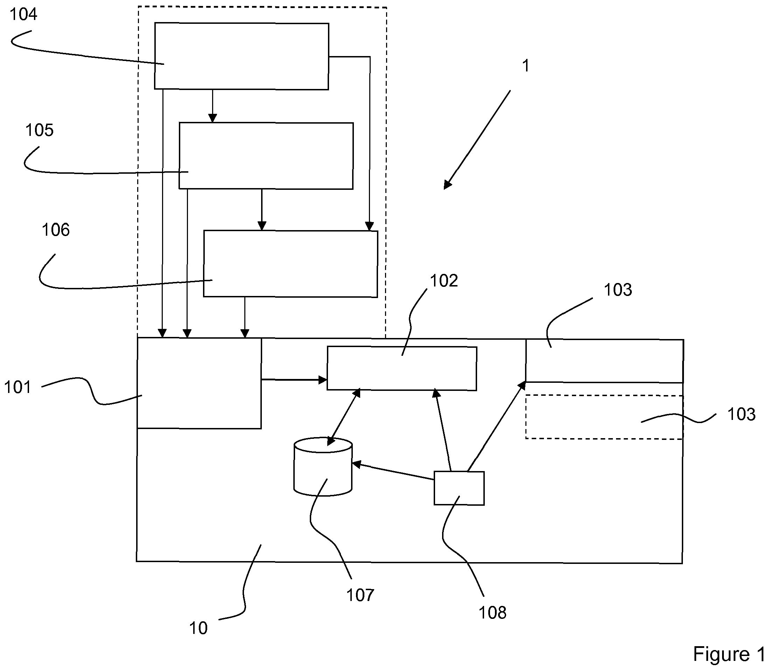

In Figure 1 a schematic view of a mobile computing device 1 of an embodiment of the present invention is shown. The mobile computing device 1 comprises a management unit 10. The management unit 10 in the depicted embodiment has an input unit 101, an appliance manager 102 and an execution unit 103. The input unit 101 may be comprised by the appliance manager 102. In the embodiment shown in Figure 1, two detection units 104, 105 as well as a monitoring unit 106 are provided. The detection units 104, 105 as well as the monitoring unit 106 may be part of the input unit 101 or may be connected thereto. Even though only one execution unit 103 is shown in the embodiment of Figure 1, it is obvious that several execution units 103 may be provided. The execution unit 103 may be part of the appliance manager 102. The appliance manager 102 and/or the execution unit 103 may be designed for accessing external units (not shown). The external units may be accessed for example via the Internet. It is also possible that the external unit, for example in case of external speakers can be accessed from the appliance manager 102 and/or the execution unit 103 via technologies such as Bluetooth.

The detection units 104, 105 or additional detection units (not shown) are designed for detecting external trigger events. The thus detected external trigger event may be transmitted to the management unit 10, in particular an input unit 101 or directly to an appliance manager 102 of the management unit. The latter case is in particular preferred in cases where the detection units 104, 105 form part of the management unit 10. The detection unit 104, 105 may, instead of merely transmitting an external trigger event signal to the management unit 10 also process the external trigger event to establish a trigger based on the external trigger event. In either case, a trigger will be received at the appliance manager 102, if an external trigger event is detected by one of the detection units 104, 105. The monitoring unit 106 which is interposed between the detection units 104, 105 may serve for monitoring additional criteria such as the duration of the detection of an external trigger event. If a monitoring unit 106 is provided for a detection unit 105, a trigger or external trigger event may only be transmitted to the input unit 101 or appliance manager 102, if the criteria of the monitoring unit 106 are fulfilled.

At the appliance manager 102 the established trigger is received. The thus received trigger is mapped to an action in the appliance manager 102, that means an action which is associated to the trigger is determined in the appliance manager 102. This determination may be performed by accessing an association database 107, which may be part of the management unit 10 or may be connected thereto for access by the management unit 10 and in particular by the appliance manager 102. In the association database 107 several triggers and several actions are stored. An action in particular is the activation or adjustment of at least one unit of the management unit 10 or of a different unit of the mobile computing device 1. In the association database 107 the action may hence indicate an execution unit 103 which is to be activated or adjusted. In addition, the association may indicate how the execution unit 103 is to be activated. One example of an execution unit 103 is an appliance launcher. If a trigger is associated to the action of activating this execution unit 103, an appliance, which is handled by this execution unit 103, will be launched. In addition, to an indication of the appliance which is to be launched, the action preferably also includes an indication of the use case in which the appliance is to be launched.

The actions and thus the execution units 103 of the management unit 10 may also be interconnected. In particular one execution unit 103 may activate a different execution unit 103. If, for example, the application which is to be launched according to an action is not available at the mobile computing device 1, execution unit 103 may activate a different execution unit 103, which may be a communication unit for establishing a communication to a remote unit, in particular an Internet server. Via this additional execution unit 103 the respective appliance may be downloaded and subsequently be launched by the execution unit 103 which was originally activated due to the determined action. Alternatively, the different execution units 103 may be initiated by the appliance manager 102 directly. In that case for example, the appliance manager 102 may generate an internal broadcast for an execution unit 103, with which the dedicated appliance is to be launched. If no execution unit 103 responds to this broadcast, the appliance manager 102 may initiate the different execution unit 103 for downloading and installing the respective appliance.

A further example of an execution unit 103 is a unit for setting a context based mode.

Furthermore one example of the execution unit 103 may be a prompting unit for providing a user with a choice of appliances and/or context modes. This output unit may be the default unit, which if no association of a trigger to an action is stored in the association data base 107, is used by the appliance manager 102 upon receipt of such a trigger. Thereby, the appliance manager 102 will receive a manual selection of an action which according to the preference of the user is to be associated to the established trigger and may use the respective association for future mapping of this trigger to an action which then represents the selected choice. In this embodiment, the appliance manager 102 is a learning system or intelligent system. The user input unit 108 may be connected to the appliance manager 102 or an execution unit 103, which in this case is a prompting unit. In addition or alternatively, the user input unit 108 may also be connected to the association database 107 directly. Via this direct connection to the association database 107, the user can provide entries for the database or change entries, without necessitating a prompt beforehand.

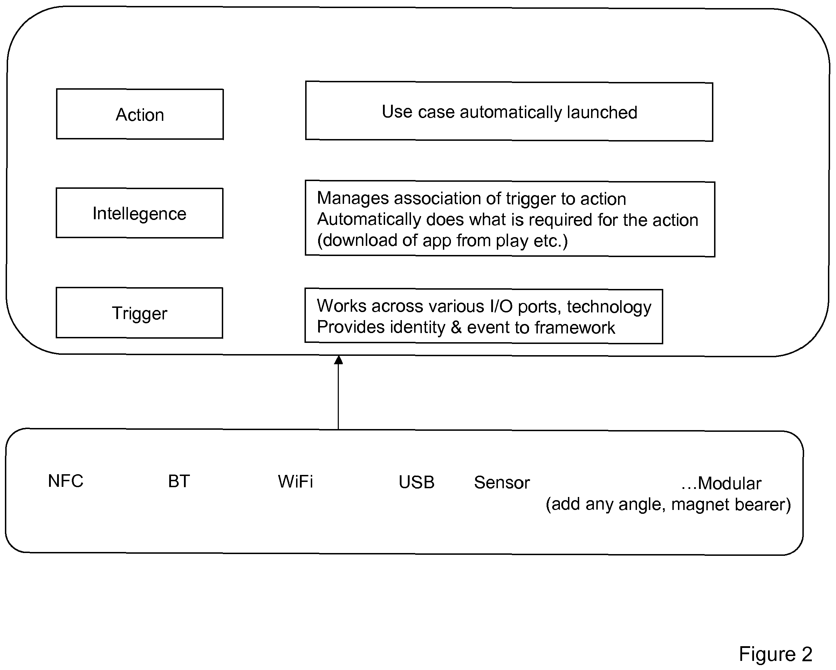

In Figure 2 the main steps of an embodiment of the method according to the invention are shown. In particular it is shown, how an application, which is hereinafter referred to as an appliance, is managed at the mobile computing device 1. The mobile computing device 1 with an appliance manager 102 according to the invention and with appliances managed by this appliance manager 102, may also be referred to as appliance framework. At the bottom of Figure 2 various technologies that may be used to provide an external trigger event which may be detected at one or several of the detection units 104, 105 of the mobile computing device 1 are indicated. The external trigger events may thus, for example, be generated and/or provided by means of NFC, BlueTooth, WiFi, USB, sensors, or modular.

An external trigger event generated and/or provided by these technologies may be detected at the mobile computing device 1. The external trigger event can be detected and a respective trigger can be established across various input/output (I/O) ports and technologies. The established trigger may comprise an input indicia, which may be the identity of the detection unit 104, 105 or an indication of the trigger event nature, and the trigger event, preferably with a trigger value of the trigger event, may be provided to the application framework, in particular the management unit 10 within the mobile computing device 1 and more particular to the appliance manager 102. The establishing of the trigger from the external trigger event may be performed, for example, at the input unit 101 of the management unit 10 or at the detection unit 104, 105, where the external trigger event is detected.

The appliance manager 10, which can also be referred to as the intelligence, manages the association of trigger to action. In addition, the appliance manager 10 may also automatically do what is required for the action, for example download an app, in particular by initiating a respective execution unit 103. The action, which is initiated by the appliance manager 102, is preferably the activation of an execution unit 103 for launching an application, that means appliance. In particular, the action may be the automatic launch of a use case of the appliance.

According to one embodiment, when a mobile computing device 1 detects an external trigger event like getting attached to a dock, proximity to a wireless technology like NFC or any kind of external trigger event, the computing device establishes a trigger. This trigger then comprises input indicia, which are additional parameters like the external trigger id or any other additional information passed to the mobile computing device 1 by an external device (not shown), which causes the external trigger event, and makes a broadcast of the trigger within the mobile computing device 1. The information format and the protocol for passing this information from an external device to the mobile computing device 1 is either based on standards like NFC, UDB sensors like accelerometer or could be proprietary like Pogo pin with binary information, current measurement etc. The mobile computing device 1 will have the required drivers to decrypt the message and pass the information as a broadcast within the mobile computing device 1.

The appliance framework, in particular the mobile computing device, encompasses the following modules: Appliance manager 102 and appliances.

The appliance manager 102 according to the invention may provide several functionalities. Preferably the appliance manager 102 is a launcher for appliances. This launching of appliances may be performed by initiating a respective execution unit 103. In that case the execution unit 103 may also be part of the appliance manager 102, so that the appliance is launched by the appliance manager 102 itself. According to the invention, it is however also possible to manually launch an appliance. In that case, the user may access the appliance manager 102, in particular open the appliance manager 102, and decide to launch one of the appliances manually. In addition, according to one embodiment the appliance manager 102 takes care of responding to triggers if no execution unit 103 and thus no appliances respond to the trigger within a certain time period. In particular the appliance manager 102 may respond to a trigger, if no execution unit 103 responds to a broadcast which the appliance manager 102 issues based on the trigger which was established based on a detected external trigger event. Preferably, the appliance manager 102 also is the entry point for downloading appliances and installing them.

As explained above, the appliance manager 102 furthermore maintains an association of trigger and action. The appliance manager 102 can also download an appliance from the shop automatically based on the parameter received from the external trigger

Furthermore, the appliance manager 102 may provide a set of functionalities, which may also be referred to as settings, which can be used by appliances or the appliances can also decide to override these functionalities. These functionalities in particular relate to the user interface which the appliance provides to the user. Some of the functionalities are:
∘ Gestures for adjusting volume
∘ Gestures for changing brightness
∘ Interface for help
∘ Appliance launcher screen that needs to be part of all other appliances
   - this is required so that the end user can switch appliances within another appliance and does not have to exit appliance to launch another one
∘ The appliance manager may keep a list of appliances installed on the device
∘ The appliance manager could also provide place holder for appliance stubs to promote appliances.

The appliance itself is an application but bound to the appliance manager and also follows the principles of the appliance framework, like listening to the broadcast messages and the UI principles for driving a dedicated appliance experience.

The appliance can be designed to launch a singular use case in full screen or can have logic to do prerequisites before launching like for e.g. starting Bluetooth, paring with an external speaker automatically and then launching the music player. This logic may also be comprised in the appliance manager.

Whenever the computing device gets a trigger event from an external source, it may broadcast a trigger as a special message with parameters received from external device. The appliances which are part of this framework, that means which are managed by the appliance manager will listen to this broadcast message. Always the appliances which are part of the framework get to respond first to the broadcast and if no appliance responds then the appliance manager will respond. If there is an appliance that is registered for the broadcast then the appliance will get launched on receiving the broadcast. If there are no applications registered for the broadcast then the appliance manager will launch the appliance launcher which provides option to the user to
- Launch an existing appliance and associate it with the external trigger
- Discover appliance from the appliance store and download an appliance which is then associated with the external trigger
- Ignore the external trigger event and do nothing
- Trigger download of an appliance stub that is displayed in the launcher

The registration of an appliance for a broadcast according to the invention can be referred to as an action being assigned to a trigger. The action in that case is the launching of the appliance and the trigger is the broadcast.

Some examples of the design of some of the triggers towards appliance framework are now described in further detail.

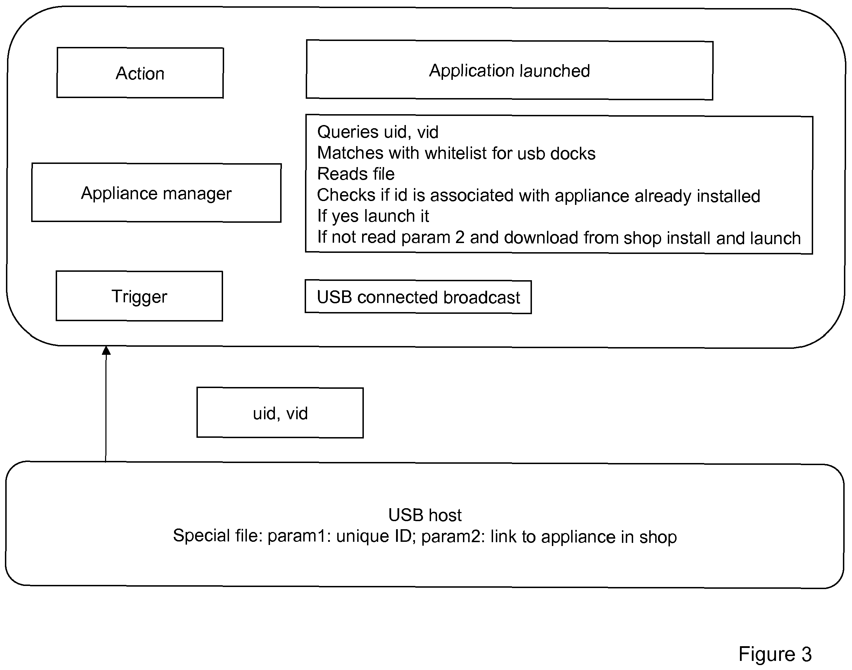

USB technology may be used for the trigger according to the present invention. This is illustrated in Figure 3. In that case, an external device has a USB host mode and contains a unique USB id and parameter.

The mobile computing device 1 on connecting to the external USB device will receive an external trigger event in form of a broadcast from the USB system of the mobile computing device that USB is connected. On receiving this event, the appliance manager will query with the USB system for the uid and vid. If the uid and vid is recognized by the appliance manager, then it will read the parameters from the USB host device (which could be special format file stored on the external device). Thereby a trigger comprising the respective IDs is established and provided to the appliance manager. The appliance manager will decrypt the parameters and then perform one of the below actions:
- If the parameter points to an appliance or to an id associated with the appliance, that means if the trigger is associated to an action, the appliance manager will perform the action of launching the appliance or sending a broadcast for the appliance to be launched
- If the appliance manager does not find the appliance on the device, the manager can decide to download the appliance from the shop and install it and then launch it.

All this logic of associating a uid, vid to appliance whitelist, reading a file from the external device and decrypting the format and performing an action like launching an appliance or download from the shop is all part of this framework. It is also possible to transfer some logic to the USB driver like association of uid, vid to the appliance whitelist and making a broadcast message.

If angle detection is used for triggers instead of USB technology, the mobile computing device may perform for example the following steps.

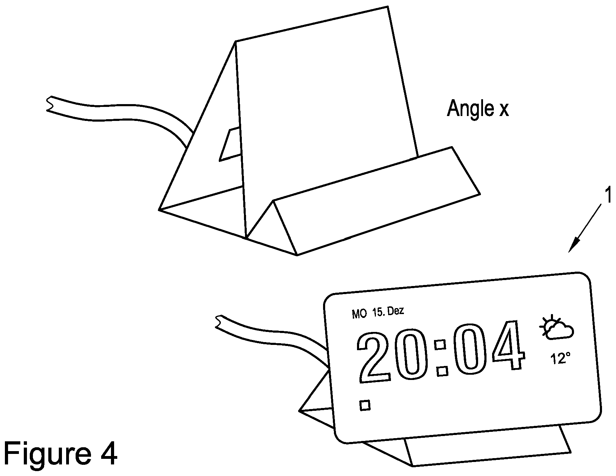

For angle detection an external dock may be used, which is designed to hold the computing device in specific angles. An example of such a dock is shown in Figure 4. Different docks may have different angles. For example, a music dock is designed to keep the computing device at angle x, the photo frame dock is designed to keep the computing device at angle y and the clock dock is designed to keep the computing device at angle z. The mobile computing device has sensor as a detection unit to read the angle of the device. So when the mobile computing device 1 is placed on a dock, the appliance manager 102 will check if there is any external trigger event and if there are no other external trigger events like USB connect or NFC in range etc., then the appliance manager will read the angle using the sensors and check if it has an association of an action, in particular launching of any appliance to the angle. If it finds an association with a particular angle then the appliance manager will launch the appliance. So if there is an association of angle x to music player, then if the computing device is rested on a music dock which makes an angle x for the mobile computing device then the music player is launched automatically.

The external trigger event may also be detected by a camera. If the computing device has a camera, for example on the front or on the back it can be used to recognize a pattern which then can be associated to a specific action, for example launching a dedicated appliance. For example, if the user goes to his living room and places the mobile computing device or tablet on a stand above his television, the camera can recognize any pattern around the mobile computing device like the wallpaper or a sticker placed nearby or anything which is in the range of the camera of the computing device. Now this computing device can ask the user for the first time to associate an appliance or a context mode to this pattern. If the user associates photo frame to the pattern recognized by the computing device for the living room, then when the user leaves the tablet on the stand, the device will automatically start the action of launching the dedicated appliance based on the trigger which is based on the pattern recognition. This pattern can be anything from a drawing to just a colour or a shape. The starting of the camera and performing pattern recognition can be activated by some interrupt or event like charger being connected which is mainly to ensure that the computing device does not have to continuously scan for patterns and drain the battery.

If the external trigger event relates to the location of the mobile computing device within such a local area network, the trigger can for example be based on WiFi hotspots. When the computing device connects to a new hotspot or WiFi router, the computing device will present the user with a choice to associate either an appliance or a context mode to the particular hotspot. For example, the user connects to a WiFi router "home" and on the first connection user will be provided with the current appliances on the device and also with the option to purchase an appliance that can be associated with this hotspot. In case of appliance, if the user selects to associate for example the photo frame with the hotspot "Home", then every time the user connects to this router, the computing device will automatically switch to the dedicated appliance mode which is photo frame in this case. In case of context mode, if the user associated the context "Living" Room" to this hotspot, then when the user connects to the "home" hotspot, the computing device will automatically switch to the "Living room" mode.

The external trigger event relating to the location and association to an action can also be done by other triggers technologies like a charger being connected. This is mainly to optimize the battery life of the computing device.

The external trigger event can also be based on ambient light. The computing device can use ambient light sensor to detect the ambient light around the device and based on various ambient light conditions associate different actions. For example, if the computing device senses the ambient light to be dark, then the device can decide to launch a "bedroom mode" or launch a particular appliance for that context. If the ambient light is bright, then the device can launch another appliance like TV.

Furthermore the invention provides an artificial intelligence engine which can be built to drive seamless transition of the mobile computing device from one appliance to another. The mobile computing device maintains an association database, which may be or comprise a table, capturing all sensor input or other trigger events as described above and assign it to actions either automatically or manually. The mobile computing device keeps learning based on information from these sensors, user actions and/or environment around and keeps updating the artificial intelligence database. The input of sensors, user actions and/or environment can be repeated and assigned to different values and actions. However, the combination of Input and Value should be assigned to only one action without causing conflict situation. The Input is also referred to as input indicia and the Value is also referred to as trigger value.

The following table shows some examples of trigger / action association, wherein each trigger comprises Input and Value. Also the Type may be considered to be part of the trigger.

| **Trigger** | | | |
|---|---|---|---|
| **Input** | **Value** | **Type** | **Action** |
| Ambient light | Ambient light value | Sensor | A1 |
| Wifi | Hot spot SSID | Bearer | A2 |
| Angle | Value of angle - x | Accelerometer | A3 |
| Location | Coordinates - x | GPS | A4 |
| Dock | Dock identifier - x | DOCK ID | A5 |
| Camera | Pattern - x | Output | A6 |
| Microphone | no detection in sound | Input | A7 |
| Angle | Value of angle - y | Accelerometer | A8 |
| Location | Coordinates - y | GPS | A9 |
| Dock | Dock identifier -y | DOCK ID | A10 |
| Camera | Pattern - y | Output | A11 |

The mobile computing device may have some pre-defined context modes which can be associated with various actions in the artificial intelligence database. Upon establishing of a respective trigger, the respective context mode may be selected as an action and the further actions listed below may automatically be initiated. The context modes may in particular be based on the current location of the mobile computing device. That means that the trigger event initiating the selection of a context mode is a trigger event relating to the location of the mobile computing device. Some examples of pre-defined contexts are listed below:
- Living Room
   ∘ Rich media (TV, movies - local & cloud)
   ∘ Photos
   ∘ Gesture control
   ∘ Communication (passive, live)
   ∘ Backup / sync
   ∘ Gaming
   ∘ Clock / Weather
   ∘ Calendar
   ∘ Security / monitoring
   ∘ Home control
- Bedroom
   ∘ Alarm clock
   ∘ Audio wake/sleep / Ambient
   ∘ Filtered communication
   ∘ Video watching on tablet
   ∘ Lights?
   ∘ High quality aux audio (USB)
- Kitchen
   ∘ Radio
   ∘ Audio / video
   ∘ Recipes
   ∘ Communication
   ∘ Home manager? Message board
   ∘ Wired / wireless accessories, e.g. scale
   ∘ Combined functionality app i.e. full screen app showing recipe timer
- Bathroom
   ∘ Weather
   ∘ Newsfeed (audio)
   ∘ Tablet reminder
   ∘ First appointment
   ∘ Radio
- Work
   ∘ Time management
   ∘ Communication - presence indicator
   ∘ Desk phone
   ∘ Remote desktop
   ∘ Live data feed (visual)
   ∘ IT Monitoring
   ∘ Collaboration (App/screen-cursor sharing)
   ∘ Simultaneous conversation on multiple d...?
- Car
   ∘ Navigation / maps
   ∘ Enable speakers
   ∘ Enable voice control
   ∘ Music
   ∘ TV, movies
   ∘ Books, magazines
   ∘ News
   ∘ Communication
   ∘ Wi-Fi connectivity
- Study
   ∘ Educational apps
   ∘ Filtered by age
   ∘ Restricted access with Parental control
   ∘ Connected to a specific ecosystem(e.g. for education)
   ∘ UX for kids - playful, colourful

An override mode may be provided, which overrides all the settings used by or actions determined by the artificial intelligence database. This is to ensure that the artificial intelligence does not override human intelligence.

Some of the overriding settings could be manually set by the user like. For example, the user may set the following rules: Never launch the appliance during specific hours or Power save mode - If no AC power or battery below x% do not launch any appliance.

Instead of merely being able to provide applications and AppWidgets, as is the case with current mobile computing devices, in particular with operating systems such as Android, the present invention with the appliance manager provides a third way of handling an application and thus a third kind of application. The appliance according to the invention according to one embodiment may also be referred to as DockApp. Features and advantages which can be realized with an application managed according to one embodiment of the present invention, are listed below.
- DockApp mime every day objects like TV sets, clocks or radios.
- The DockApp needs a minimum of interaction from the user side
- The UI does not look like a computer program but like something from the household
- Single activity only, widget like in Android
- Like an AppWidget the DockApp is a single view only
- DockApps are lightweight and the one activity they possess represents their UI
- Full screen, no status bar, light off mode
- A DockApp contains as little distraction points as possible. Therefore it takes the whole screen and also the status bar is not visible
- The DockApp has to restore its previous state. When the appliance is automatically launched then the DockApp has to start where it stopped previously. E.g. a radio DockApp should directly start playing when it stopped previously and also have the same settings as it had when the user left it. Thereby the user will be provided with the experience of an old fashioned radio; pressing the on/off button always brought the user to the same station at the same volume. This is exactly the behaviour which can be achieved for the DockApp's. Values that need to be stored/restored are in particular: screen dimming, volume, channel, picture, colours, etc.
- DockApps can be optimized for instant start and stop (<500ms)
- DockApps don't have pre-start screens - A dock app starts immediately with its UI. No splash screens, info screens, license now screens, buy full version screens, you used 20 of 30 days trial or any other screen is to be presented on start
- DockApp prefer gestures over UI elements. DockApps may look like every day objects, e.g. radio, TV-Set, clocks or aquariums. Instead of having an UI full of buttons and lists, it is preferred to have the possibility of multi touch gestures for controlling the DockApp. The gestures could be swipes from left to right, from right to left, up to down, down to up.
- A small subject of gestures is the same through all DockApps. It follows the pattern "learn once, apply everywhere". The following gestures could be the same in all DockApps:
   ∘ Two finger swipe up-down = volume increase/decrease
   ∘ Three finger swipe up-down = Dim brighten screen
   ∘ Two fingers swipe from right border to centre = Drag in the fixed DockApp menu. This is the menu containing help, configuration, switch DockApp, make DockApp standard and others
   ∘ Two fingers swipe from left border to centre = Drag in the individual DockApp menu (Playlist, channel list, pictures...)
   ∘ One finger swipe left-right = change channel, radio station, page, picture
   ∘ One finger swipe from top border of the screen to centre = Drag in the notifications bar

The present invention automatically combines the thought of having a cost optimized tablet without compromising performance or quality but also drive a dedicated appliance experience using a software framework and an accessory ecosystem.

With the present invention a dedicated appliance mode, that means specific use case settings of an application, can be designed on a computing device, in particular a mobile computing device. The invention has several core options and capabilities. For example it will be possible to provide a trigger for launching a dedicated appliance on the computing device. Furthermore, principles for driving a dedicated appliance experience on a mobile computing device can be performed in a simple manner, hence, facilitating the handling of the applications on the mobile computing device by the user. In addition, how an appliances can be purchased, configured on a computing device using an online shop can be flexibly adjusted with the present invention. Furthermore, the an artificial intelligence engine can be used to drive seamless transition of device from on appliance to another with the present invention. In addition, the invention may extend from appliance to any context based mode for a computing device.

Known operating system and application platform for mobile computing devices such as for example Android platform has lot of applications that drive some of the appliance use cases like digital clock, radio, weather information etc. However, these applications do not have a dedicated user experience since it is retrofitted on a tablet experience which is mainly around media consumption. Some of the problems that exist with the Android application are as follows. There is no possibility for using a docking concept to trigger a dedicated appliance. In addition, the applications on Android are generally menu driven and do not offer full screen experience. The applications on Android cannot be automatically launched based on external events - there is no software framework to this as of today. All of these problems can be addressed with the present invention.

### Reference Numbers

- 1: mobile computing device
- 10: management unit
- 101: input unit
- 102: appliance manager
- 103: Execution unit
- 104: detection unit
- 105: detection unit
- 106: monitoring unit
- 107: association data base
- 108: user input unit

## Claims

1. Method for managing applications on a mobile computing device (1), which comprises at least one management unit (10), **characterized in that** at least one external trigger event is detected by a detection unit (104, 105) of the management unit (10), wherein the external trigger event relates to the state of the mobile computing device (1),
**in that** based on the detected external trigger event a trigger is established and based on the trigger an action, which is associated to the trigger in an association database (107), is automatically determined in an appliance manager (102) of the management unit (10)
**in that** the determined action relates to at least one application and that the determined action is initiated automatically,
**in that** the trigger comprises a trigger value of the trigger event and an input indicia indicative of the event nature, wherein a combination of a trigger value and an input indicia is assigned to only one action, and
**in that** that the initiation of the action is performed by a broadcast within the mobile computing device.

2. Method according to claim 1, **characterized in that** the state of the mobile computing device (1) relates to the position or location of the mobile computing device (1).

3. Method according to anyone of claims 1 or 2, **characterized in that** the external trigger event relates to the location of the mobile computing device (1) in a wireless communication network, to the geographical location of the mobile computing device, to the electrical connection of the mobile computing device to an external device and/or to the angular position of the mobile computing device.

4. Method according to anyone of claims 1 to 3, **characterized in that** the external trigger event is detected by optical, mechanical, electronic means.

5. Method according to anyone of claims 1 to 4, **characterized in that** the duration for which an external trigger event has been detected is monitored, preferably by at least one monitoring unit (106) of the management unit (10).

6. Method according to anyone of claims 1 to 5, **characterized in that** a trigger is based on at least two external trigger events, wherein preferably a priority of external trigger events is observed in the management unit and most preferably wherein the highest priority is assigned to the external trigger event that the mobile computing device (1) is connected to a power source.

7. Method according to anyone of claims 1 to 6, **characterized in that** the association of triggers to actions in the association database is carried out automatically, semi-automatically and/or manually.

8. Method according to anyone of claims 1 to 7, **characterized in that** the action which is initiated comprises launching an application, establishing settings of the mobile computing device (1), in particular settings of at least one application, generating a prompt to the user and/or accessing content.

9. Method according to anyone of claims 1 to 8, **characterized in that** before initiating the action, the management unit (10) checks for availability of the resources required for the action and in absence of the resources obtains the resources, preferably by downloading it from the internet.

10. Method according to anyone of claims 1 to 9, **characterized in that** the action is carried out in a different way when initiated by the appliance manger (102) then by initiation of another unit of the mobile computing device (1), in particular manual input keys.

11. Mobile computing device having at least one management unit (10) for managing applications on the mobile computing device (1), **characterized in that** the management unit (10) comprises at least one detection unit (104, 105) for detecting at least one external trigger event relating to the state of the mobile computing device (1) and at least one appliance manager (102) comprising at least one association database (107), **in that** at least one unit of the mobile computing device (1) is designed for establishing a trigger based on the detected external trigger event and for initiating actions based on the established trigger
**in that** the trigger comprises a trigger value of the trigger event and an input indicia indicative of the event nature, wherein a combination of a trigger value and an input indicia is assigned to only one action, and
**in that** that the initiation of the action is performed by a broadcast within the mobile computing device.

12. Mobile computing device according to claim 11, **characterized in that** the detection unit (104, 105) has optical, mechanical and/or electronic means for detecting the external trigger event, in particular **in that** the detection unit (104, 105) comprises a wireless connection unit, a camera, a mechanical connection unit, a location detection unit, and/or a sensor, in particular a light sensor or an angle sensor for detecting the external trigger event.

13. Mobile computing device according to claim 11 or 12, **characterized in that** the management unit (10) comprises a memory unit for storing the association database (107) of associations from triggers to actions for subsequent use of the association for determining an action which is associated to a trigger.

14. Mobile computing device according to anyone of claims 11 to 13, **characterized in that** the mobile computing device (1) has at least one user input unit (108) for receiving user input and the user input unit is connected directly or indirectly to the association database (107) of the management unit (10).

15. Mobile computing device according to claim 11 to 14, **characterized in that** the management unit is integrated in the operating system of the mobile computing device (1).

16. Mobile computing device according to anyone of claims 11 to 15, **characterized in that** the mobile computing device has means for carrying out a method according anyone of claims 1 to 10.

## Patentansprüche

1. Verfahren zum Verwalten von Anwendungen auf einem mobilen Computergerät (1), das zumindest eine Verwaltungseinheit (10) umfasst, **dadurch gekennzeichnet, dass** zumindest ein externer Trigger-Event durch eine Detektionseinheit (104, 105) der Verwaltungseinheit (10) detektiert wird, wobei der externe Trigger-Event sich auf den Zustand des mobilen Computergerätes (1) bezieht, dass basierend auf dem detektierten externen Trigger-Event ein Trigger erzeugt wird und basierend auf dem Trigger eine Aktion, die mit dem Trigger in einer Assoziations-Datenbank (107) assoziiert ist, automatisch in einem Anwendungsmanager (102) der Verwaltungseinheit (10) bestimmt wird, dass die bestimmte Aktion sich auf zumindest eine Anwendung bezieht und dass die bestimmte Aktion automatisch initiiert wird, dass der Trigger einen Trigger-Wert des Trigger-Events und einen Eingabehinweis, der für die Natur des Events indikativ ist, umfasst, wobei eine Kombination eines Trigger-Wertes und eines Eingabehinweises zu nur eine einzigen Aktion zugeordnet ist, und dass die Initiierung der Aktion durch einen Broadcast in dem mobilen Computergerät durchgeführt wird.

2. Verfahren nach Anspruch 1, **dadurch gekennzeichnet, dass** der Zustand des mobilen Computergerätes (1) sich auf die Position oder den Ort des mobilen Computergerätes (1) bezieht.

3. Verfahren nach einem der Ansprüche 1 oder 2, **dadurch gekennzeichnet, dass** der externe Trigger-Event sich auf den Ort des mobilen Computergerätes (1) in einem drahtlosen Kommunikationsnetzwerk, auf den geographischen Ort des mobilen Computergerätes, auf die elektrische Verbindung des mobilen Computergerätes zu einem externen Gerät und/oder auf die Winkelposition des mobilen Computergerätes bezieht.

4. Verfahren nach einem der Ansprüche 1 bis 3, **dadurch gekennzeichnet, dass** der externe Trigger-Event durch optische, mechanische, elektronische Mittel detektiert wird.

5. Verfahren nach einem der Ansprüche 1 bis 4, **dadurch gekennzeichnet, dass** die Dauer für die ein externer Trigger-Event detektiert wurde, überwacht wird, vorzugsweise durch zumindest eine Überwachungseinheit (106) der Verwaltungseinheit (10).

6. Verfahren nach einem der Ansprüche 1 bis 5, **dadurch gekennzeichnet, dass** ein Trigger auf zumindest zwei externen Trigger-Events basiert, wobei vorzugsweise eine Priorität externer Trigger-Events in der Verwaltungseinheit beachtet wird und besonders bevorzugt, wobei die höchste Priorität dem Trigger-Event, dass das mobile Computergerät (1) mit einer Stromquelle verbunden ist, zugeordnet ist.

7. Verfahren nach einem der Ansprüche 1 bis 6, **dadurch gekennzeichnet, dass** die Assoziation von Triggern zu Aktionen in einer Assoziationsdatenbank automatisch, halbautomatisch und/oder manuell durchgeführt wird.

8. Verfahren nach einem der Ansprüche 1 bis 7, **dadurch gekennzeichnet, dass** die Aktion, die initiiert wird, Starten einer Anwendung, Erzeugen von Einstellungen des mobilen Computergerätes (1), insbesondere Einstellungen von mindestens einer Anwendung, Erzeugen einer Aufforderung an den Nutzer und/oder den Zugriff auf Inhalte umfasst.

9. Verfahren nach einem der Ansprüche 1 bis 8, **dadurch gekennzeichnet, dass** vor dem Initiieren der Aktion, die Verwaltungseinheit (10) die Verfügbarkeit der Ressourcen, die für die Aktion notwendig sind, überprüft und bei Abwesenheit der Ressourcen die Ressourcen beschafft, vorzugsweise durch Herunterladen dieser aus dem Internet.

10. Verfahren nach einem der Ansprüche 1 bis 9, **dadurch gekennzeichnet, dass** die Aktion auf eine andere Weise ausgeführt wird, wenn diese durch den Anwendungsmanager (102) initiiert wird, als bei Initiierung von einer anderen Einheit des mobilen Computergerätes (1), insbesondere manuelle Eingabetasten.

11. Mobiles Computergerät, das zumindest eine Verwaltungseinheit (10) zum Verwalten von Anwendungen in dem mobilen Computergerät (1) aufweist, **dadurch gekennzeichnet, dass** die Verwaltungseinheit (10) zumindest eine Detektionseinheit (104, 105) zum Detektieren zumindest eines externen Trigger-Events, der sich auf den Zustand des mobilen Computergerätes (1) bezieht und zumindest einen Anwendungsmanager (102) umfasst, der zumindest eine Assoziationsdatenbank (107) umfasst, dass zumindest eine Einheit des mobilen Computergerätes (1) ausgelegt ist, um basierend auf dem detektierten externen Trigger-Event einen Trigger zu erzeugen und um Aktionen basierend auf dem erzeugten Trigger zu initiieren, dass der Trigger einen Trigger-Wert des Trigger-Events und eine Eingabehinweis, der für die Natur des Events indikativ ist, umfasst, wobei eine Kombination eines Trigger-Wertes und eines Eingabehinweises nur zu einer einzigen Aktion zugeorndet ist, und dass die Initiierung der Aktion durchgeführt wird durch einen Broadcast innerhalb des mobilen Computergerätes.

12. Mobiles Computergerät nach Anspruch 11, **dadurch gekennzeichnet, dass** die Detektionseinheit (104, 105) optische, mechanische und/oder elektronische Mittel zum Detektieren des externen Trigger-Events aufweist, insbesondere dass die Detektionseinheit (104), 105) eine drahtlose Verbindungseinheit, eine Kamera, eine mechanische Verbindungseinheit, eine Ortsdetektionseinheit und/oder einen Sensor, insbesondere einen Lichtsensor oder einen Winkelsensor zum Detektieren des externen Trigger-Events umfasst.

13. Mobiles Computergerät nach Anspruch 11 oder 12, **dadurch gekennzeichnet, dass** die Verwaltungseinheit (10) eine Speichereinheit zum Speichern der Assoziationsdatenbank (107) von Assoziationen von Triggern zu Aktionen für die anschließende Nutzung der Assoziation zur Bestimmung einer Aktion, die mit einem Trigger assoziiert ist, umfasst.

14. Mobiles Computergerät nach einem der Ansprüche 11 bis 13, **dadurch gekennzeichnet, dass** das mobile Computergerät (1) zumindest eine Nutzer-Eingabeeinheit (108) zum Erhalt von Nutzereingabe aufweist und die Nutzer-Eingabeeinheit direkt oder indirekt mit der Assoziationsdatenbank (107) der Verwaltungseinheit (10) verbunden ist.

15. Mobiles Computergerät nach einem der Ansprüche 11 bis 14, **dadurch gekennzeichnet, dass** die Verwaltungseinheit in das Betriebssystem des mobilen Computergerätes (1) integriert ist.

16. Mobiles Computergerät nach einem der Ansprüche 11 bis 15, **dadurch gekennzeichnet, dass** das mobile Computergerät Mittel zum Ausführen eines Verfahrens nach einem der Ansprüche 1 bis 10 aufweist.

## Revendications

1. Procédé de gestion d'applications sur un dispositif informatique mobile (1), qui comprend au moins une unité de gestion (10), **caractérisé en ce que**
au moins un événement de déclenchement externe est détecté par une unité de détection (104, 105) de l'unité de gestion (10), dans lequel l'événement de déclenchement externe se rapporte à l'état du dispositif informatique mobile (1),
**en ce que**, sur la base de l'événement de déclenchement externe détecté, un déclenchement est établi et, sur la base du déclenchement, une action, qui est associée au déclenchement dans une base de données d'association (107), est déterminée automatiquement dans un gestionnaire d'applications (102) de l'unité de gestion (10),
**en ce que** l'action déterminée se rapporte à au moins une application et **en ce que** l'action déterminée est initiée de manière automatique,
**en ce que** le déclenchement comprend une valeur de déclenchement de l'événement de déclenchement et un indice d'entrée indicatif de la nature de l'événement, dans lequel une combinaison d'une valeur de déclenchement et d'un indice d'entrée est affectée à une seule action, et
**en ce que** l'initiation de l'action est exécutée par une diffusion à l'intérieur du dispositif informatique mobile.

2. Procédé selon la revendication 1, **caractérisé en ce que** l'état du dispositif informatique mobile (1) se rapporte à la position ou à l'emplacement du dispositif informatique mobile (1).

3. Procédé selon l'une quelconque des revendications 1 ou 2, **caractérisé en ce que** l'événement de déclenchement externe se rapporte à l'emplacement du dispositif informatique mobile (1) dans un réseau de communications sans fil, à la position géographique du dispositif informatique mobile, à la liaison électrique du dispositif informatique mobile avec un dispositif externe et/ou à la position angulaire du dispositif informatique mobile.

4. Procédé selon l'une quelconque des revendications 1 à 3, **caractérisé en ce que** l'événement de déclenchement externe est détecté par des moyens optiques, mécaniques, électroniques.

5. Procédé selon l'une quelconque des revendications 1 à 4, **caractérisé en ce que** la durée pendant laquelle un événement de déclenchement externe est détecté est contrôlée, de préférence, par au moins une unité de contrôle (106) de l'unité de gestion (10).

6. Procédé selon l'une quelconque des revendications 1 à 5, **caractérisé en ce qu'**un déclenchement est basé sur au moins deux événements de déclenchement externe, dans lequel, de préférence, une priorité d'événements de déclenchement externe est observée dans l'unité de gestion et, plus préférablement, dans lequel la priorité la plus élevée est affectée à l'événement de déclenchement externe tel que le raccordement du dispositif informatique mobile (1) à une source d'énergie.

7. Procédé selon l'une quelconque des revendications 1 à 6, **caractérisé en ce que** l'association de déclenchements à des actions dans la base de données d'association est mise en oeuvre de manière automatique, semi-automatique et/ou manuelle.

8. Procédé selon l'une quelconque des revendications 1 à 7, **caractérisé en ce que** l'action qui est initiée comprend le lancement d'une application, l'établissement de paramètres du dispositif informatique mobile (1), en particulier, de paramètres d'au moins une application, la production d'un message de sollicitation à l'utilisateur et/ou l'accès à un contenu.

9. Procédé selon l'une quelconque des revendications 1 à 8, **caractérisé en ce que**, avant l'initiation de l'action, l'unité de gestion (10) contrôle la disponibilité des ressources requises pour l'action et, en l'absence des ressources, obtient les ressources, de préférence, en les téléchargeant depuis internet.

10. Procédé selon l'une quelconque des revendications 1 à 9, **caractérisé en ce que** l'action est mise en oeuvre de manière différente selon qu'elle est initiée par le gestionnaire d'application (102) ou qu'elle est initiée par une autre unité du dispositif informatique mobile (1), en particulier par des touches d'entrée manuelle.

11. Dispositif informatique mobile comportant au moins une unité de gestion (10) destinée à gérer des applications sur le dispositif informatique mobile (1), **caractérisé en ce que** l'unité de gestion (10) comprend au moins une unité de détection (104, 105) pour détecter au moins un événement de déclenchement externe se rapportant à l'état du dispositif informatique mobile (1) et au moins un gestionnaire d'applications (102) comprenant au moins une base de données d'association (107), **en ce qu'**au moins une unité du dispositif informatique mobile (1) est conçue de manière à établir un déclenchement sur la base de l'événement de déclenchement externe détecté et à initier des actions sur la base du déclenchement établi,
**en ce que** l'élément de déclenchement comprend une valeur de déclenchement de l'événement de déclenchement et un indice d'entrée représentatif de la nature d'événement, dans lequel une association d'une valeur de déclenchement et d'un indice d'entrée est affectée à une seule action, et
**en ce que** l'initiation de l'action est mise en oeuvre par une diffusion à l'intérieur du dispositif informatique mobile.

12. Dispositif informatique mobile selon la revendication 11, **caractérisé en ce que** l'unité de détection (104, 105) comporte des moyens optiques, mécaniques et/ou électroniques pour détecter l'événement de déclenchement externe, en particulier, **en ce que** l'unité de détection (104, 105) comprend une unité de liaison sans fil, une caméra, une unité de liaison mécanique, une unité de détection de position et/ou un capteur, en particulier, un capteur de lumière ou un capteur angulaire pour détecter l'événement de déclenchement externe.

13. Dispositif informatique mobile selon la revendication 11 ou 12, **caractérisé en ce que** l'unité de gestion (10) comprend une unité de mémoire destinée à mémoriser la base de données d'association (107) des associations de déclenchements à des actions en vue d'une utilisation ultérieure de l'association pour déterminer une action qui est associée à un déclenchement.

14. Dispositif informatique mobile selon l'une quelconque des revendications 11 à 13, **caractérisé en ce que** le dispositif informatique mobile (1) comporte au moins une unité d'entrée d'utilisateur (108) pour recevoir l'entrée d'utilisateur, et l'unité d'entrée d'utilisateur est reliée directement ou indirectement à la base de données d'association (107) de l'unité de gestion (10).

15. Dispositif informatique mobile selon la revendication 11 à 14, **caractérisé en ce que** l'unité de gestion est intégrée au système d'exploitation du dispositif informatique mobile (1).

16. Dispositif informatique mobile selon l'une quelconque des revendications 11 à 15, **caractérisé en ce que** le dispositif informatique mobile comporte des moyens destinés à mettre en oeuvre un procédé selon l'une quelconque des revendications 1 à 10.
